# EUROPEAN PATENT APPLICATION

(11) **EP 2 551 971 A1**
(43) Date of publication of application: **30.01.2013**
(21) Application number: 11290340.6
(22) Date of filing: 27.07.2011
(51) Int. Cl.: H01S 3/00, H01S 3/30, H01S 3/23, G02F 1/35

(54) **Method for the production of ultrashort and ultrahigh peak power laser pulses and system for putting into practice this method**

(71) Applicant: Ecole Polytechnique, 91120 Palaiseau (FR); Princeton University, Princeton NJ 08544-0036 (US)
(72) Inventor: Mourou, Gérard, 75014 Paris (FR); Tajima, Toshiki, 85748 Garching (DE); Fisch, Nathaniel J., Princeton, NJ 08540 (US); Malkin, Vladimir M., Princeton, NJ 08540 (US); Toroker, Zeev, Princeton, NJ 08540 (US)
(74) Representative: Thinat, Michel

(57) **Abstract**

The invention concerns a method for producing ultrashort and ultrahigh peak power laser pulses and a system for putting into practice this method.

The production of ultrashort and ultrahigh peak power laser pulses is implemented by amplifying and compressing relatively long and low energy laser pulses to such ultra short and ultrahigh peak power pulses, and the use of the plasma compression technique for producing ultrashort and ultrahigh peak power pulses having a duration in the range of 20 femtoseconds (fs) or less and an energy of at least 10 Kilojoule (kJ), wherein a pump pulse (PP) in the order of picoseconds (ps) and a seed pulse (SS) are applied to the plasma cell (PLC), which are synchronized with one another and adapted to the plasma cell.

## Description

The invention relates to a method for the production of ultrashort high peak power laser pulses by amplifying and compressing relatively long and low power laser pulses to such ultrashort and ultra high peak power pulses, and a system for putting in practice this method.

The laser, by its coherence, monochromaticity and field magnitude was found to be the gateway to novel spectroscopic methods of investigation that deepen the understanding of the atomic structure. However this laser technique was unsufficient to probe the subsequent strata formed by the nucleus, the nucleon or the vacuum. Neither the laser photoenergy nor its electric field have been large enough to conceive decisive experiments beyond the atomic level. To reach the level where relevant nuclear and/or high energy physics investigations could be undertaken, a new type of large scale laser infrastructure was conceived under the aegiis of the European scientific communauty. The goal of this new infrastructure named Extreme Light Infrastructure (ELI) is to yield very high peak power and laser focused intensity. With its peak power of 200 petawatt (PW), ELI represents the actual largest civilian laser project in the world. This gargantuan power will be obtained by releasing kilojoules (kJ) in 10 femtoseconds (fs). Focusing this power over a micrometer size spot will yield intensities in the 10²⁵W/cm² range, well into the ultra relativistic regime. This extremely high peak power will lead to ultrahigh electric fields, but also according to the pulse intensity - duration conjecture to ultrashort pulses of high energy particules and radiations, in the attosecond-zeptosecond regime. The particle energy could be in the GeV-100GeV regime, enough to give access to Nuclear Physics, High Energy Physics or Vacuum Physics.

ELI will enable to reach the entry point into this new regime. To get deeper will demand intensities two or may be three orders of magnitude higher than what is planned by ELI. The regime beyond the exawatt, towards the zettawatt is the next high intensity function. It could be realized by compressing the energy delivered by NIF or LMJ - like laser to 10 femtoseconds (fs) duration. However none of the actually applied technics, i.e. the Chirped Pulse Amplification (CPA), the Optical Parametric Chirped Pulse Amplification (OPCPA) and plasma compression (PC) is suited to obtain this regime.

Indeed, when for instance starting from a 10 Kilojoule (kJ) level, 5 nanoseconds (ns) pulse and wanting to compress it into a 10 femtoseconds (fs) pulse by CPA or OPCPA technique, there is a serious problem with diffraction gratings. For such an application it would be necessary to use a broadband (200 nanometer) metal-coated gratings. These gratings have a low damage threshold of the order of 100 millijoule (mJ/cm²). A basic CPA/OPCPA arrangement will therefore require a costly grating area as large as 10 to 100m² formed by tiling of the order of 100 gratings of 1m² area. In the case of using the plasma compression technique alone, it will require a plasma with an unrealistic length. The rule of thumb here for Backward Raman Amplification imposes that the plasma must be uniform over the length given by half the laser pulse length. This corresponds to a plasma of 0.75 cm long for a 5ns pump pulse, with several centimeter aperture. However getting good plasma uniformity over this entire volume is obviously very complicated.

The object of the present invention is particularly to propose a method for producing ultrashort and ultrahigh peak power laser pulses reaching the exa-zettawatt level.

For reaching this object, the method according to the invention is characterized by the use of the plasma compression technique for producing ultrashort and ultrahigh peak power pulses having a duration in the range of 20 femtoseconds (fs) or less and an energy of at least 10 Kilojoule (kJ), wherein a pump pulse (PP) in the order of picoseconds (ps) and a seed pulse (SS) are applied to the plasma cell (PLC), which are synchronized with one another and adapted to the plasma cell.

According to a feature of the invention, the method is characterized by a cascaded conversion compression including a first step utilizing the Chirped Pulse Amplification (CPA) technique, a second step utilising the Optical Parametric Chirped Pulse Amplification (OPCPA) technique which, a third step of using the Plasma Compression (PC) technique.

According to another feature of the invention, the method is characterized in that the Chirped Pulse Amplification (CPA) technique is used for producing the Pump Pulse (PP).

According to another feature of the invention, the method is characterized in that the pump pulse is obtained by compressing a laser pulse having a duration in the range of nanoseconds, preferably in the range of some nanoseconds, and an energy of at least 10 Kilojoules.

According to another feature of the invention, the method is characterized in that the Optic Parametric Chirped Pulse Compression (OPCPA) technique is used for producing the seed pulse (SS).

According to another feature of the invention, the method is characterized in that the seed pulse (SS) is produced by applying to the crystal (CR) of the OPCPA device as pump pulse a fraction (PCR) of the pump pulse (PP) applied to the plasma cell, after frequency doubling.

According to another feature of the invention, the method is characterized in that the seed pulse (SS) is a pulse having an energy in the range of at least some 10 joules, preferably in the range of at least 100 joules.

According to the invention, the system for putting into practice the method is characterized by a combination of a Chirped Pulse Amplification (CPA) device, and Optic Parametric Chirped Pulse Amplification (OPCPA) device and a plasma Compression (CP) device.

According to a feature of the invention, the system is characterized in that the Chirped Pulse Amplification device is adapted to produce the pulse pump (PP) for the plasma Compression (CP) device.

According to another feature of the invention, the system is characterized in that the Optic Parametric Chirped Pulse Amplification device is adapted for producing the seed pulse (SS) for the Plasma Compression device (CP).

According to another feature of the invention, the system is characterized in that the Chirped Pulse Amplification device and the Optic Parametric Chirped Pulse Amplification device are combined with one another in a way that the seed pulse is produced by applying to the Optic Parametric Chirped Pulse Amplification device PP a small double frequency fraction of the pump pulse produced by the Chirped Pulse Amplification (CPA) device.

Other features and advantages of the invention will become apparent from the description given below which only serves as an example and is no way limiting the scope of the invention, with reference to the attached drawings wherein.
- Figure 1 is a schematic diagram of a cascaded conversion compression according to the invention, and
- Figure 2 is a schematic diagram displaying the concept of multiple-beam pumping according to the invention.

The invention is based on a cascaded conversion compression including application in three successive steps of the three existing techniques of Chirped Pulse Amplification (CPA), Optical Parametric Chirped Pulse Amplification (OPCPA) and Plasma Compression (PC), in view to produce ultrashort and ultra high peak power laser pulses. The combination of these three basic techniques makes possible the efficient compression of for instance 10 or 20 Kilojoules (kJ), 5 nanoseconds (ns) pulses into Megajoule (MJ) femtoseconds (fs) pulses. For reaching the exa-zettawatt level necessary for experiences beyond the atomic level, it is desirable to produce at least pulses of the order of 10kJ and of 10fs or 20 fs.

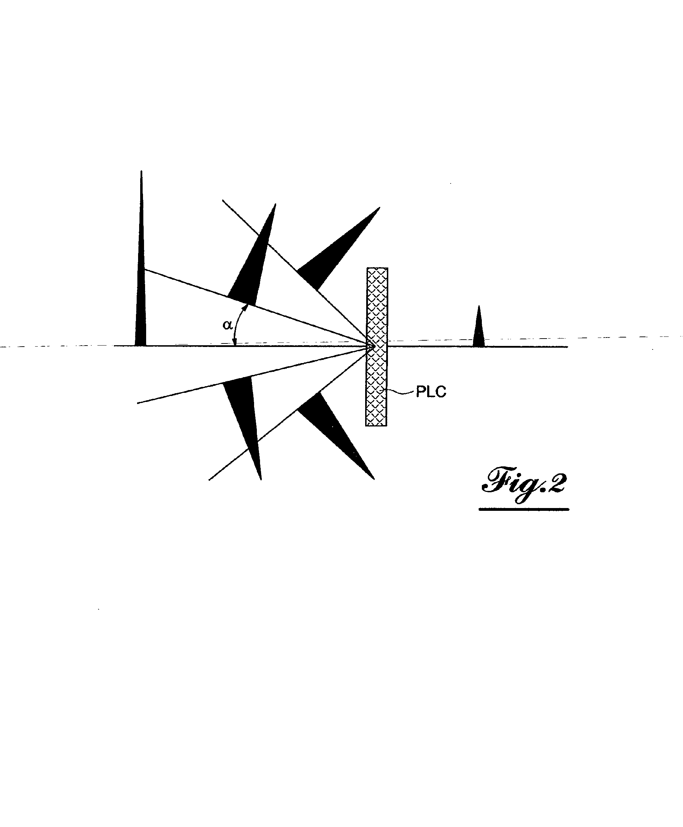

The invention will be described in a detailed manner herebelow with reference to figure 2 which shows the compression technique proposed by the invention and resulting from the cascading action of the three fundamental techniques CPA, OPCPA and PC.

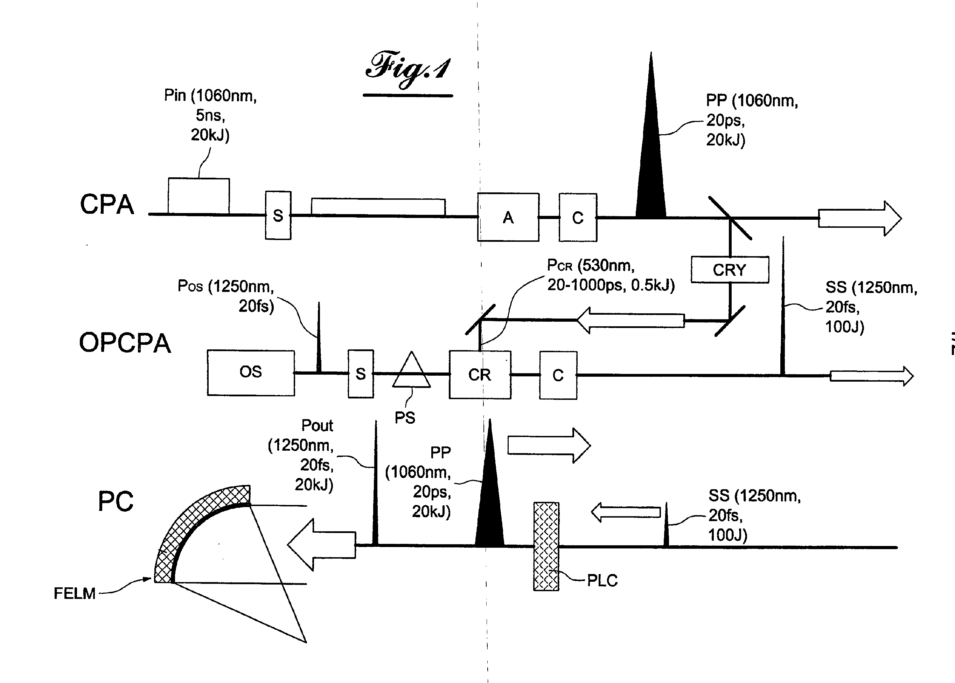

The figure 1 illustrates in its upper part the first step of applying the Chirped Pulse Amplification technique CPA. As known per se, a CPA device involves the use of a stretcher S conceived to produce a chirped pulse P1, an amplifier A for amplifying the components of the chirped pulse and a compressor C for compressing the chirped pulse into a compressed pulse which is used in the third step as pump pulse and is thus called pump pulse PP. For instance as input pulse a 20kJ pulse Pin having a duration of 5 nanosecondes (ns) and a wavelength of 1060 ns is applied to the CPA device. The final compressed pulse which is the pulse PP of 20kJ has a duration of 20 picoseconds (ps) and a wavelength of 1060 nm. Since the final pulse duration of 20 ps corresponds to a narrow bandwidth, electric gratings can conveniently be used instead of metal-coated ones. The electric gratings are important for two reasons. First, for a narrow bandwidth, they have an excellent efficiency of 99%. Second, because the pulse duration of 20ps is rather long, the gratings have a much higher damage threshold than metal-coated ones. The damage threshold for dielectric for 20ps is around 5J/cm² while for metal coated ones it is 0,1 J/cm² for 10-20 femtosecond (fs) pulses. It is to be noted that for the regime of nanoseconds to 1 picosecond the damage threshold in dielectric varies according to T ½, where T is the incident pulse duration. This represents a considerable improvement of 50 times which translates linearly in total area and costs. Third, they are commercially available in a square meter size. The compression step will take only 0.2 m² area gratings for 10kJ.

In the second step the Optical Parametric Chirped Pulse Amplification (OPCPA) technique is used for producing a strong femtosecond seed pulse SS which in the illustrated example has a duration of 20fs, an energy of 100J and a wavelength of 1250nm. The OPCPA technique is well adapted to produce such a seed pulse. The OPCPA device which is known per se comprises, mounted in series, a stretcher S, a crystal CR such as a KDP (monopotassium phosphate) crystal and a compressor C. A femtosecond (fs) signal oscillator OS applies a fs pulse Pos having in the illustrated example a duration of 20fs and a wavelength of 1250nm to the stretcher S of the OPCPA device. The crystal CR receives the temporarily stretched pulse produced by the stretcher and a pump pulse P_{CR} obtained from the 20ps pulse PP of the CPA device, by means of a crystal CRY. This crystal generates a pulse pump P_{CR} having a small fraction of the energy of the pulse PP and the double frequency. Thus the crystal CR of the OPCPA device receives a pump pulse having in the described example a wavelength of 530nm, a duration of 20-1000ps and an energy of 0.5kJ.

It is to be noted that for preserving the pulse shortness a prism PS is used in the OPCPA device after the stretcher S to produce the necessary angular chirp.

The third step uses the pulse compression (PC) technique for producing ultrashort ultra high peak power output pulses Pout of for instance 10fs or 20fs (as in the example), 20kJ and 1250nm by applying to a plasma cell PL the seed signal SS obtained by the second OPCPA step and as pump pulse the pulse P_{com} of the first CPA step. In this step the method called Backward Raman Amplification (BRA) method is applied in order to reduce the pulse duration from 20ps to 20fs or 10fs. The Raman amplification amplifies radiations at frequencies ωₛ = ωₗ - ωₚ where ωₛ is the Raman frequency, ωₗ the laser frequency and ωₚ the plasma frequency given by ωₚ = (4Σ en_{0/}m)^{1/2}. Here e and m are the charge and mass of the electron and no is the plasma electronic density. For the present example, the pump wavelength is at 1250nm. For a plasma frequency of n₀=10¹⁹ cm⁻³ the Raman wavelength will correspond to the wavelength of 1250nm of the seed signal SS which has been chosen for this purpose. This point is important because during the amplification process the BRA signal produced by the interference of the pump pulse PP and the seed signal SS, will compete with the fast Raman Back Scattering (RBS) caused by the pump scattering on the thermal Langmuir waves on its way to the seed pulses. This deleterious effect may lead to premature pump depletion and also to undesirable pedestal formed prior to the main signal pulse. One way to strongly attenuate this effect is to provide the largest possible input seed pulse SS and the OPCPA technic is perfectly suited for this task.

Again with reference to figure 1, in the third step of compression by light conversion through Backward Raman scattering, the pump pulse PP of "20kJ, 20ps, 1250nm" and the seed signal SS of 10-20 femtoseconds (fs) duration at 1250nm collides in the plasma cell PLC having a length L of about 3mm, corresponding to Tₚ x C/2, where Tp is the pump pulse duration and c the speed of light in the plasma.

The pulse intensity Iₚ must be of the order of 10¹⁷ W/cm² corresponding to a fluence Fₚ of about 1kJ/cm². It imposes a cell diameter of about 3cm for a 20kJ beam. It is worth noting that the plasma compression technique is less insensitive to the number and the direction of the pump beams than the optics utilizing crystals, as the plasma does not have intrinsic axes of symmetry like the crystal. However, as the Raman process operates close to the wavebreak limit, there may be unwanted nonlinear effects, or one may have to compromise the efficiency to avoid the unwanted nonlinearities. Therefore it could be possible to pump the plasma cell with 8 LIL beams, coming at different angles in accordance to figure 2 which shows a multitude of pulses. The volume grating produced by the interferences between the signal and the pump pulse will diffract the light in the signal direction as shown on figure 3. It represents an elegant and simple way to multiplex and compress the 8 beams into one beam of 10-20fs, 100kJ.

Conceptually this scheme could be extended to the NIF-Laser and the Laser called Laser Megajoule with 200 beams.

For an easier understanding of the invention, the description thereof has been made here before the basis of a specific example. It is however to be noted that the invention is not limited to the values which have been given. These values should be considered to indicate only orders of the magnitude of these values and to constitute only examples within corresponding magnitude ranges.

The following table gives further examples and allows optimization by means of three cases.

| Case | no cm⁻³ | Ts,in (fs) | Tp (ps) | Ip, in (W/cm2) Fp, in (kJ/cm²) | Plasma length mm | Tout (fs) | lout, (PW/cm²) Fout (kJ/cm²) | Efficiency % |
|---|---|---|---|---|---|---|---|---|
| 1 | 10¹⁹ | 20 | 40 | 1.2x10¹⁴ | 6 | 50 | 2.4 | 50 |
| | 10¹⁹ | 20 | | 4.8 | | 50 | 50 | |
| 2 | 2x10¹⁹ | 20 | 20 | 2x10¹⁴ | 3 | 35 | 50 | 46 |
| | | | | | | | 2 | |
| | | 20 | 11 | 4.5x10¹⁴ 5 | | 26 | 84 | 44 |
| | | | | | | | 2.2 | 44 |
| 3 | 10²⁰ | | 2 | 4.6x10¹⁴ .9 | 6 | 20 | 46 | 24 |
| | | 11 | 2 | 2x10¹⁵ 4 | .3 | 20 | .92 | 24 |

In this table no is the plasma electronic density, Tₛ is the duration of the seat pulses SS in the range of femtosecondes (fs), Tp is the duration of the pump pulses PP in the range of picoseconds (ps), Ip, in the intensity of the pump pulses, F_{p,in} is the corresponding fluence, Tₒᵤₜ is the duration of the output pulse Pₒᵤₜ in the range of femtosecondes (fs) and Iₒᵤₜ and Fₒᵤₜ are respectively the intensities of the output pulse and the corresponding fluence.

The three cases shown on the table involve a single pump beam where a plasma slab mediates the Raman compression. The pump pulse is obtained by compressing the 5ns pulse Pin (fig. 1) into a 40ps, 20ps, 11ps and 2ps pulse PP by using the CPA technique in the first compression step. The OPCPA technique provides a seed pulse SS of 20fs and 11fs. Three plasma electronic densities nₒ of 10¹⁹, 2 x 10¹⁹ and 10²⁰ cm⁻³ have been studied. At these plasma densities Landau damping and inverse bremmstrahlung are considered. The self-consistent heating of the plasma, dispersion effects of the waves are also taken into account. The plasma is assumed to be carbon, which in mediating the wave interactions becomes fully-ionized.

Case 1. The plasma density nₒ is 10¹⁹ cm⁻³. For a seed pulse SS of 20 fs duration, this case is optimized by a 40 ps pump pulse PP with an intensity Iₚ of 1.2x10¹⁴W/cm2. The plasma length is 6mm. The output pulse Pout is 50 fs with 50% efficiency.

The pump fluence is 4.8 kJ/cm2, meaning that a plasma with a cross-section of 2 cm² will process 10kJ. A 20 fs input seed signal produces a 50 fs output pulse having an intensity Iₒᵤₜ of 50 PW cm⁻² or a fluence of 2.5kJ cm⁻². Thus the efficiency of energy conversion is about 50%. Clearly a shorter input pulse is advantageous in compressing into a shorter output pulse. But it will require a higher plasma density. This will be explored and confirmed in the two following cases.

Case 2. Mediation by a plasma with density of 2x10¹⁹cm⁻³. This case is optimized by a pump pulse of 20 ps with intensity of 2x10¹⁴W/cm². The plasma length is 3 mm. The output pulse has 35 fs with 46% efficiency.

However, with shorter input pump duration, the output can be somewhat shortened. For shorter pump duration, the output pulse can also be somewhat shortened. For a pump intensity of 4.5X10¹⁴W/cm², and an input pulse Pin of 11 ps, the output pulse will have a duration of 26 fs with a 44% efficiency.

Case 3. Mediation by a plasma density of 10²⁰cm⁻³. This case is optimized by a pump pulse of 2 ps with an intensity of 4.6 x 10¹⁴W/cm². The plasma length is about 6 mm. The output pulse duration is 20fs with an efficiency of 24%.

Keeping the same density shorter output pulses can be achieved.

For a 11fs input pulse a 20 fs output pulse can be produced. The pump pulse requirement is 2ps, so that the plasma length is about 0.3mm. Here, the input intensity is 2x10¹⁵W/cm² and relatively independent of the input seed pulse intensities with range from 1 to 100 TW cm⁻² (non indicated in the table). The output pulse has an intensity of about 46PW/cm², corresponding to an efficiency of 24%.

These results of the three cases summarized in the table lead to the remarkable conclusion that it is indeed possible to compress 10kJ pulse, by using the cascade conversion compression technique, to 10 to 20 fs with good efficiency. The three techniques combined provide an overall compression factor of almost 10⁶. The grating size for the CPA part - reasonable and affordable - will be less than 1m² for a damage threshold of 5J/cm². The plasma size would also be of the order of 2cm². The technique has also the capability to compress 8 different beams coming from different directions into a single pulse/beam of about 100kJ. This step opens the way to the compression of pulses in the MJ regime provided by NIF Laser or the Laser called LMJ (Laser Megajoule).

In the foregoing the invention has been described by taking as example the combination of the three techniques of Chirped Pulse Amplification (CPA), Optic Parametric Chirped Pulse Amplification (OPCPA) and Plasma Compression (PC), wherein the pump pulse is produced by application of the Chirped Pulse Amplification technique and the seed pulse by application of the Optic Parametric Chirped Pulse Amplification technique. It is to be emphasized that the cascaded compression method and system thus obtained should be considered to constitute a particularly advantageous manner to produce the ultrashort and ultra high peak power pulses according to the invention, without however being limited thereto. Accordingly the invention covers also methods and systems wherein the pulse pump and the seed pulse are obtained by any other convenient techniques provided that the pulse pump and the seed pulse are synchronized with one another and adapted to the plasma cell of the plasma compression device.

The method proposed by the invention opens a novel paradigm in fundamental physics. The cascaded conversion compression technique applied to MJ systems enable the exploration of fundamental physics into the depth that far surpasses what can be seen today. For example, the current laser wakefield acceleration (LWFA) based collider concept is designed on the plasma density around 10¹⁷/cm³, with a laser of 30-100J for a stage, requiring 40MW total laser power for the eventual collider. When adopting the plasma at the lower density of 10¹⁵/cm³ for example, the necessary average laser power, the toughest requirement, in a collider would dramatically decrease due to the 3/2 power scaling of the plasma density. On the other hand, as the laser energy per stage scales inversely proportionally with the 3/2 power of the density, this would require a lot higher energy laser (10kJ per stage). Having no such laser available currently, perhaps the adoption of higher density design would be understandable. However, not only the laser power requirement but also other beam handling requirements such as the emittance control are much relaxed in the low-density / high energy laser operation of LWFA if the current technique can provide large energy low power lasers.

As another example of fundamental physics application, it can be considered the probing of a possible nonlinearity of vacuum due to fundamental new light-mass weak coupling fields such as dark matter and dark energy. With a 100kJ class laser one can foresee the search power to be as sensitive as even the level of the weakest gravitational coupling. This is because the search capability (i.e. the signal) for the new fields increases as a function of the laser energy cubed and inversely proportional to the pulse length of the laser.

As exemplified by these two prominent fundamental applications, the advancement of intense short-pulsed laser energy by 2-3 orders of magnitude enables a tremendous potential of unprecedented discoveries. These include : TeV physics, new light-mass weak-coupling field discovery potential, nonlinear QED and QCD fields, radiation physics in the vicinity of the Schwinger field, and zeptosecond dynamical spectroscopy of vacuum.

The invention provides furthermore the possibility for obtaining the highest obtainable intensity, i.e. about 10²⁶W/cm² for an exawatt pulse, such as the output pulse Pₒᵤₜ on figure 1, by using precision, disposable centimeter size f#1 optics. The indication f#1 is well known to the person skilled in the art. Figure 1 shows such a focussing extreme light mirror FELM in the pass of the outpout pulse Pₒᵤₜ. This mirror which is a dielectric plasma mirror is bear, gold or Al-coated. The mirror will be exposed over the all area to an intensity of the order of 10¹⁸W/cm² producing a highly reflective plasma. The incident pulse can be focused to an intensity of more than 10²⁶W/cm². It is vital to produce a high contrast pulse so no pre-plasma is formed before the main pulse arrival on the mirror. These small size and low cost mirrors can be of the one shot type, i.e. be replaced after each shot.

## Claims

1. The invention relates to a method for the production of ultrashort and ultrahigh peak power laser pulses by amplifying and compressing relatively long and low energy laser pulses to such ultra short and ultrahigh peak power pulses, **characterized by** the use of the plasma compression technique for producing ultrashort and ultrahigh peak power pulses having a duration in the range of 20 femtoseconds (fs) or less and an energy of at least 10 Kilojoule (kJ), wherein a pump pulse (PP) in the order of picoseconds (ps) and a seed pulse (SS) are applied to the plasma cell (PLC), which are synchronized with one another and adapted to the plasma cell.

2. Method according to claim 1, **characterized by** a cascaded conversion compression including a first step utilizing the Chirped Pulse Amplification (CPA) technique, a second step utilising the Optical Parametric Chirped Pulse Amplification (OPCPA) technique which, a third step of using the Plasma Compression (PC) technique.

3. Method according to any of claims 1 or 2, **characterized in that** the Chirped Pulse Amplification (CPA) technique is used for producing the Pump Pulse (PP).

4. Method according to claim 3, **characterized in that** the pump pulse is obtained by compressing a laser pulse having a duration in the range of nanoseconds, preferably in the range of some nanoseconds, and an energy of at least 10 Kilojoules.

5. Method to any of claims 1 to 4, **characterized in that** the Optic Parametric Chirped Pulse Compression (OPCPA) technique is used for producing the seed pulse (SS).

6. Method according to claim 5, **characterized in that** the seed pulse (SS) is produced by applying to the crystal (CR) of the OPCPA device as pump pulse a frequency doubled fraction (P_{CR}) of the pump pulse (PP) to be applied to the plasma cell.

7. Method according to any of claims 1 to 6, **characterized in that** the seed pulse (SS) is a pulse having an energy in the range of at least some 10 joules, preferably in the range of at least 100 joules.

8. System for putting into practice the method of any of claims 1 to 7, **characterized by** a combination of a Chirped Pulse Amplification (CPA) device, and Optic Parametric Chirped Pulse Amplification (OPCPA) device and a plasma Compression (CP) device.

9. System according to claim 8, **characterized in that** the Chirped Pulse Amplification device is adapted to produce the pulse pump (PP) for the Plasma Compression (CP) device.

10. System according to any of claims 8 or 9, **characterized in that** the Optic Parametric Chirped Pulse Amplification device is adapted for producing the seed pulse (SS) for the Plasma Compression device (CP).

11. System according to claim 10, **characterized in that** the Chirped Pulse Amplification device and the Optic Parametric Chirped Pulse Amplification device are combined with one another in a way that the seed pulse is produced by applying to the Optic Parametric Chirped Pulse Amplification device PP a small double frequency fraction of the pump pulse produced by the Chirped Pulse Amplification (CPA) device.
